(19) **Europäisches Patentamt**
**European Patent Office**
**Office européen des brevets**

(11) **EP 4 507 410 A1**

(12) **EUROPEAN PATENT APPLICATION**
published in accordance with Art. 153(4) EPC

(43) Date of publication:
**12.02.2025 Bulletin 2025/07**

(21) Application number: **22948414.2**

(22) Date of filing: **29.06.2022**

(51) International Patent Classification (IPC):
*H04W 64/00* (2009.01)

(52) Cooperative Patent Classification (CPC):
**H04W 64/00**

(86) International application number:
**PCT/CN2022/102454**

(87) International publication number:
**WO 2024/000299 (04.01.2024 Gazette 2024/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventor: **TANG, Yunshuai
Shenzhen, Guangdong 518129 (CN)**

(74) Representative: **Maiwald GmbH
Engineering
Elisenhof
Elisenstrasse 3
80335 München (DE)**

(54) **POSITIONING METHOD AND DEVICE**

(57) A positioning method is provided. The method includes: A first device sends first information to a second device, where the first information includes a size of a time synchronization smooth window used when the first device performs data communication with the second device. The first device receives, in the time synchronization smooth window, a plurality of data frames sent by the second device. The first device determines first time and a first multipath delay based on the plurality of data frames, where the first time is a sending timing advance of the second device generated when the first device communicates with the second device. The first device determines location information of the second device based on the first time and the first multipath delay. When the second device is positioned, the second device can be positioned without using dedicated ranging signaling or by using only a small amount of signaling.

FIG. 6

**Description**

**TECHNICAL FIELD**

The present invention relates to the field of communication technologies, and in particular, to a positioning method and a device.

**BACKGROUND**

Currently, when positioning and measurement are performed on a terminal device, measurement is usually performed based on an air interface propagation delay. Generally, when measurement is performed based on the air interface propagation delay, a dedicated positioning frame is required, and a large amount of signaling needs to be exchanged. If measurement is performed by using the dedicated positioning frame, complexity of a technology, for example, complexity of a MAC layer, is increased, a large quantity of air interface resources are occupied, and system efficiency is reduced.

**SUMMARY**

This application provides a positioning method and a device, to implement positioning and measurement of a terminal device by using data frames propagated on a broadcast channel and an uplink data channel.

According to a first aspect, this application provides a positioning method. The method includes: A first device sends first information to a second device, where the first information includes a size of a time synchronization smooth window used when the first device performs data communication with the second device. The first device receives, in the time synchronization smooth window, a plurality of data frames sent by the second device. The first device determines first time and a first multipath delay based on the plurality of data frames, where the first time is a sending timing advance of the second device generated when the first device communicates with the second device. The first device determines location information of the second device based on the first time and the first multipath delay.

In the foregoing solution, when determining the location information of the second device, the first device determines the location information of the second device by using the sending timing advance of the second device generated when the first device performs time synchronization with the second device. In this way, when ranging or positioning is performed on the second device, dedicated ranging signaling does not need to be added, or only a small amount of signaling needs to be added, thereby reducing costs of performing ranging/positioning on a second node.

In a possible implementation, that the first device determines first time based on the plurality of data frames includes: determining a multipath gravity center of each of the plurality of data frames received in the time synchronization smooth window; and determining the first time based on the plurality of multipath gravity centers.

In other words, when determining the sending timing advance of the second device (a time synchronization reference point of the first device and the second device), the first device may use, as the sending timing advance of the second device, a deviation between a multipath gravity center and local time when each of the plurality of data frames received by the first device in the time synchronization smooth window is transmitted in frequency domain.

In a possible implementation, that the first device determines location information of the second device based on the first time and the first multipath delay includes: determining, based on the first time and the first multipath delay, an air interface propagation delay in communication between the first device and the second device; and determining the location information of the second device based on the air interface propagation delay.

In other words, when the first device determines the location information of the second device based on the air interface propagation delay between the first device and the second device, the first device may consider, by default, that multipath delays generated when the first device and the second device receive signals are the same. In this case, the first device may determine the location information of the second device based on the sending timing advance of the second device and the multipath delay of the first device. In this way, when the first device determines the location information of the second device, no additional signaling needs to be added, thereby reducing costs of performing ranging/positioning on the second node.

In a possible implementation, the method further includes: The first device receives third information sent by the second device, where the third information carries a second multipath delay, and the second multipath delay is a delay generated when the second device receives information sent by the first device.

In other words, when the first device performs positioning or ranging on the second device, to ensure accuracy of performing positioning or ranging on the second device, the first device may further obtain the multipath delay generated when the second device receives the information.

In a possible implementation, that the first device determines location information of the second device based on the first time and the first multipath delay includes: determining, based on the first time, the first multipath delay, and the second multipath delay, an air interface propagation delay in communication between the first device and the second device; and determining the location information of the second device based on the air interface propagation delay.

In other words, the first device determines the air interface propagation delay between the first device and the second device by using the first time, the first multipath delay, and the second multipath delay. This ensures accuracy of the air interface delay determined by the first device. In this way, accuracy of the location information of the second device that is determined by the first device by using the air interface delay is ensured.

According to a second aspect, an embodiment of this application provides a positioning method. The method includes: A second device receives first information sent by a first device, where the first information includes first time, and the first time is a sending timing advance of the second device generated when the first device communicates with the second device. The second device receives a plurality of data frames sent by the first device, and determines a second multipath delay of the second device based on the plurality of data frames. The second device determines location information of the second device based on the first time and the second multipath delay.

In the foregoing solution, the first device and the second device determine the location information of the second device based on the first time sent by the first device and the multipath delay of the second device. When any two nodes perform information transmission, time synchronization needs to be performed (that is, a sending timing advance of one of the nodes is determined). Therefore, when the second device determines the location information of the second device, additional signaling is avoided, and costs of performing ranging/positioning on a second node are reduced.

In a possible implementation, that the second device determines location information of the second device based on the first time and the second multipath delay includes: determining, based on the first time and the second multipath delay, an air interface propagation delay in communication between the first device and the second device; and determining the location information of the second device based on the air interface propagation delay.

In other words, when the second device determines location information of the first device and the location information of the second device, the second device may determine the location information of the second device by determining the air interface propagation delay between the second device and the first device.

In a possible implementation, the method further includes: The second device receives second information sent by the first device, where the second information carries a first multipath delay, and the first multipath delay is a delay generated when the first device receives information sent by the second device.

In other words, when the second device determines the location information of the second device, to ensure accuracy of the determined location of the second device, the second device may further obtain, from the first device, the multipath delay generated when the first device receives information.

In a possible implementation, that the second device determines location information of the second device based on the first time and the second multipath delay includes: determining, based on the first time, the first multipath delay, and the second multipath delay, an air interface propagation delay in communication between the first device and the second device; and determining the location information of the second device based on the air interface propagation delay.

In other words, the second device determines the air interface propagation delay between the first device and the second device by using the first time, the first multipath delay, and the second multipath delay. This ensures accuracy of the air interface propagation delay between the first device and the second device that is determined by the second device. In this way, accuracy of the location information of the second device that is determined by using the air interface delay is ensured. That is, accuracy of performing ranging or positioning on the second device is ensured by adding a small amount of signaling.

According to a third aspect, this application provides a network device, including:

a sending module, configured to send first information to a terminal device, where the first information includes a size of a time synchronization smooth window used when a first device performs data communication with a second device;

a receiving module, configured to receive, in the time synchronization smooth window, a plurality of data frames sent by the terminal device; and

a processing module, configured to determine first time and a first multipath delay based on the plurality of data frames, where the first time is a sending timing advance of the second device generated when the first device communicates with the second device, where

the processing module is further configured to determine a distance between the network device and the terminal device based on the first time and the first multipath delay.

In a possible implementation, the processing module is configured to:

determine a multipath gravity center of each of the plurality of data frames received in the time synchronization smooth window; and

determine the first time based on the plurality of multipath gravity centers.

In a possible implementation, the processing module is configured to:

determine, based on the first time and the first multipath delay, an air interface propagation delay in communication between the first device and the second device; and
determine the location information of the second device based on the air interface propagation delay.

In a possible implementation, the receiving module is further configured to:
receive third information sent by the second device, where the third information carries a second multipath delay, and the second multipath delay is a delay generated when the second device receives information sent by the first device.

In a possible implementation, the processing module is configured to:

determine, based on the first time, the first multipath delay, and the second multipath delay, an air interface propagation delay in communication between the first device and the second device; and
determine the location information of the second device based on the air interface propagation delay.

According to a fourth aspect, an embodiment of this application provides a terminal device, including:

a receiving module, configured to receive first information sent by a network device, where the first information includes first time, and the first time is a sending timing advance of a second device generated when a first device communicates with the second device, where
the receiving module is further configured to receive a plurality of data frames sent by the first device, and determine a second multipath delay of the second device based on the plurality of data frames; and
a processing module, configured to determine location information of the second device based on the first time and the second multipath delay.

In a possible implementation, the processing module is configured to:

determine, based on the first time and the second multipath delay, an air interface propagation delay in communication between the first device and the second device; and
determine the location information of the second device based on the air interface propagation delay.

In a possible implementation, the receiving module is further configured to:
receive second information sent by the first device, where the second information carries a first multipath delay, and the first multipath delay is a delay generated when the first device receives information sent by the second device.

In a possible implementation, the processing module is configured to:

determine, based on the first time, the first multipath delay, and the second multipath delay, an air interface propagation delay in communication between the first device and the second device; and
determine the location information of the second device based on the air interface propagation delay.

According to a fifth aspect, this application provides a computer-readable medium. The computer storage medium stores instructions, and when the instructions are run on a computer, the computer is enabled to perform the method provided in the first aspect or the second aspect.

According to a sixth aspect, this application provides a computer program product including instructions. When the instructions are run on a computer, the computer is enabled to perform the method provided in the first aspect or the second aspect.

**BRIEF DESCRIPTION OF DRAWINGS**

To describe the technical solutions in embodiments of the present invention more clearly, the following briefly describes the accompanying drawings for describing embodiments. It is clear that the accompanying drawings in the following description show merely some embodiments of the present invention, and a person of ordinary skill in the art may still derive other drawings from these accompanying drawings without creative efforts.

FIG. 1 is a flowchart of performing positioning based on an air interface propagation delay;
FIG. 2 is a schematic diagram of a system architecture of a wireless communication system according to an embodiment of this application;
FIG. 3 is a schematic diagram of a hardware structure of a base station according to an embodiment of this application;

FIG. 4 is a schematic diagram of a hardware structure of a terminal device according to an embodiment of this application;

FIG. 5A and FIG. 5B are a schematic diagram of a process of performing data communication between two nodes according to an embodiment of this application;

FIG. 6 is a method flowchart of a positioning method according to an embodiment of this application;

FIG. 7 is a schematic diagram of estimating a synchronization reference time point according to an embodiment of this application;

FIG. 8 is a schematic diagram of a data transmission process between two nodes according to an embodiment of this application;

FIG. 9 is a schematic diagram of a structure of a network device according to an embodiment of this application; and

FIG. 10 is a schematic diagram of a structure of a terminal device according to an embodiment of this application.

## DESCRIPTION OF EMBODIMENTS

To make objectives, the technical solutions, and advantages of embodiments of this application clearer, the following describes the technical solutions in embodiments of this application with reference to the accompanying drawings.

In the descriptions of embodiments of this application, any embodiment or design scheme described with words "example", "for example", or "in an example" should not be understood as being more preferred or having more advantages than another embodiment or design scheme. Exactly, use of the words such as "example", "for example", or "in an example" is intended to present a relative concept in a specific manner.

Moreover, terms "first" and "second" are merely intended for description, and shall not be understood as an indication or implication of relative importance or an implicit indication of an indicated technical feature. Therefore, a feature limited by "first" or "second" may explicitly or implicitly include one or more features. The terms "include", "have", and their variants all mean "include but are not limited to", unless otherwise specifically emphasized in another manner.

Generally, in mobile communication, a mobile terminal and a base station may be connected to each other through an air interface. Therefore, when the terminal device is positioned, measurement and positioning may be performed based on an air interface propagation delay. The air interface is relative to the concept of "line interface" in wired communication.

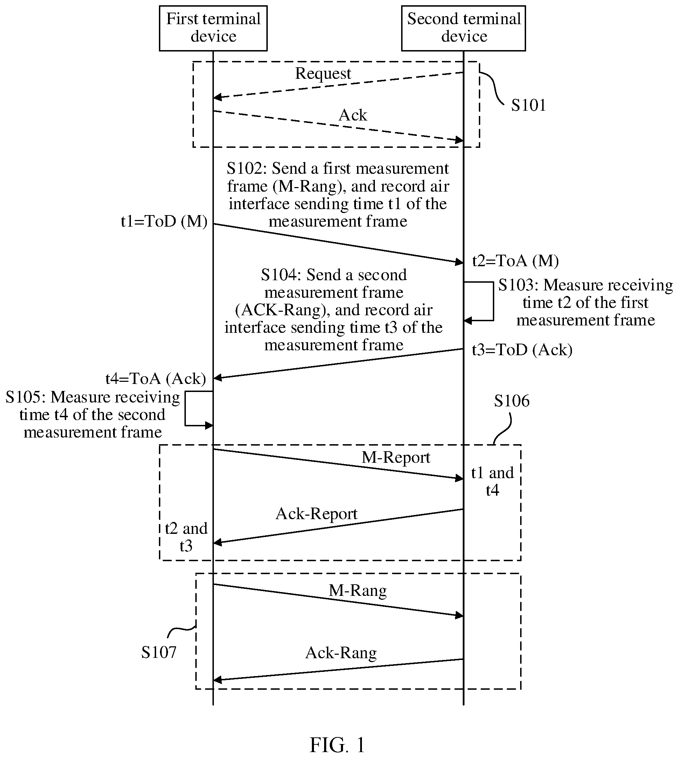

For example, FIG. 1 is a schematic diagram of performing positioning based on an air interface propagation delay. As shown in FIG. 1, S101 to S106 are included.

S101: A first terminal device exchanges signaling with a second terminal device, to determine that a communication connection is to be established between the first terminal device and the second terminal device.

In this embodiment, when the signaling is exchanged between the first terminal device and the second terminal device, the second terminal device may send a request (request) frame to the first terminal device, to request to establish the connection to the first terminal device. After the first terminal device receives the request frame sent by the second terminal device, the first terminal device may send an acknowledgment (ACK) frame to the second terminal device, to indicate that the first terminal device may establish the communication connection to the second terminal device.

S102: The first terminal device sends a first measurement frame (M-Rang) to the second terminal device, and records air interface sending time t1 of the measurement frame.

In this embodiment, an air interface delay in communication between the first terminal device and the second terminal device may be measured by using the first measurement frame.

S103: The second terminal device records receiving time t2 of the first measurement frame.

S104: The second terminal device sends a second measurement frame (ACK-Rang) to the first terminal device, and records air interface sending time t3 of the measurement frame.

In this embodiment, the second measurement frame may be a response frame, and indicates that the second terminal device receives the first measurement frame sent by the first terminal device.

S105: The first terminal device records receiving time t4 of the second measurement frame.

S106: The first terminal device sends t1 and t4 to the second terminal device, and the second terminal device sends t2 and t3 to the first terminal device.

In this embodiment, a process in which the first terminal device and the second terminal device exchange t1 and t4 and t2 and t3 is a process in which the first terminal device and the second terminal device are aligned to a same clock. In this case, additional signaling is required to transmit a clock deviation.

The first terminal device and the second terminal device may estimate an air interface propagation delay $RTT = ((t4-t1)-(t3-t2))$ based on received time information. A distance D between the first terminal device and the second terminal device may be obtained based on the calculated air interface delay: $D = c*RTT/2$. c is a speed of light.

S107: Repeat the first step to the sixth step to perform measurement smoothing for a plurality of times.

In the foregoing solution, one positioning process requires a plurality of times of sending and receiving of measurement frames and signaling frames. Consequently, in the positioning process, more air interface resources are occupied, and system efficiency is reduced. To resolve a problem that system efficiency is reduced because a plurality of signaling exchanges are required in the foregoing positioning or ranging process and a large quantity of air interface resources are occupied, embodiments of this application provide a positioning method. The method may be applied to a wireless communication system. In this method, positioning and measurement of a terminal device are implemented without using a dedicated positioning frame. In embodiments of this application, ranging and positioning may be implemented, by using a broadcast channel, an uplink data channel, and data transmitted on the broadcast signal and the uplink data channel, between any two nodes that perform communication.

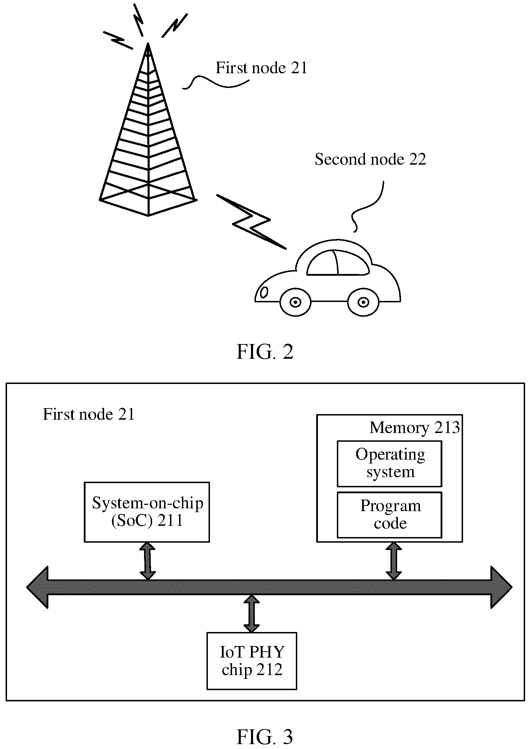

For example, FIG. 2 is a schematic diagram of a system architecture of a wireless communication system according to an embodiment of this application. As shown in FIG. 2, the wireless communication system includes a first node 21 and a second node 22. Wireless communication, for example, short-range point-to-point communication or wireless local area network communication, may be performed between the first node 21 and the second node 22. When a location of the second node 22 relative to the first node 21 changes, a delay in signal transmission between the second node 22 and the first node 21 that is performed through an air interface also changes. Therefore, the first node 21 may perform positioning or ranging on the second node 22 by using an air interface propagation delay between the second node 22 and the first node 21. The first node 21 may determine the air interface delay in the signal transmission between the first node 21 and the second node 22 by using data frames propagated on a broadcast channel and an uplink data channel between the second node 22 and the first node 21. In this way, ranging or positioning is implemented on the second node 22. In this embodiment of this application, the first node 21 may be a master device. The second node 22 may be a slave device scheduled by the first node 21.

In some embodiments, the first node 21 may be a base station, and the second node 22 may be a terminal device. In embodiments of this application, the terminal device is an electronic device having a signal receiving and sending function or a terminal device installed with the electronic device, for example, a car, a mobile phone, a tablet computer, a notebook computer, or a wearable device.

The foregoing describes the wireless communication system in embodiments of this application. The following describes components in the wireless communication system shown in FIG. 2.

First, the first node 21 is described. For example, FIG. 3 is a schematic diagram of a hardware structure of the first node 21. The first node in FIG. 3 may be but is not limited to the foregoing base station. As shown in FIG. 3, the first node 21 includes a system-on-chip (System-on-chip, SoC) 211, an IoT PHY chip 212, and a memory 213.

The memory 213 is configured to store program instructions and data, for example, store delay information of the second node 22 and a program instruction for implementing ranging or positioning on the second node 22.

The system-on-chip 211 reads the program instructions and the data that are stored in the memory 213, to implement ranging or positioning on the second node 22.

The IoT PHY chip is a physical interface transceiver of the first node 21, and is an entrance and an exit for the first node 21 to communicate with the outside.

It may be understood that the structure shown in this embodiment of this application does not constitute a specific limitation on the first node 21. In some other embodiments of this application, the first node 21 may include more or fewer components than those shown in the figure, or combine some components, or split some components, or have different component arrangements. The components shown in the figure may be implemented by hardware, software, or a combination of software and hardware.

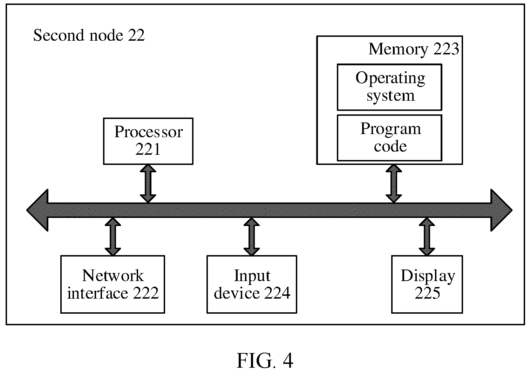

Next, the second node 22 is described. The second node 22 in FIG. 4 may be but is not limited to the foregoing terminal device. As shown in FIG. 4, the second node 22 includes a processor 221, a network interface 222, and a memory 223. Optionally, the second node 22 further includes an input device 224 and a display 225. The processor 221, the network interface 222, the memory 223, the input device 224, and the display 225 may be connected by using a bus or in another manner.

The memory 223 is a memory device of the second node 22, and is configured to store a program and data, for example, store a signal and delay information that are sent by the first node 21. The memory 223 provides storage space, and the storage space stores an operating system of the terminal device 22. The operating system includes but is not limited to a Windows system (an operating system), a Linux system (an operating system), a HarmonyOS (an operating system), or the like. This is not limited herein.

In this solution, the processor 221 (also referred to as a central processing unit (central processing unit, CPU)) is a computing core and a control core of the second node 22. The processor 221 reads program instruction and the data that are stored in the memory 223, to adjust, based on the delay information sent by the first node 21, time for sending a signal to the first node 21.

The network interface 222 may include a standard wired interface and a standard wireless interface (for example, a mobile communication interface). The network interface 222 is controlled by the processor 221 and is configured to receive and send data, for example, receive a signal and a timing advance that are sent by the first node 21. The input device 224 is configured to receive input information of a user. The display 225 is configured to display the input information of the user.

It may be understood that the structure shown in this embodiment of this application does not constitute a specific limitation on the second node 22. In some other embodiments of this application, the second node 22 may include more or fewer components than those shown in the figure, or combine some components, or split some components, or have different component arrangements. The components shown in the figure may be implemented by hardware, software, or a combination of software and hardware.

The following describes, based on the content described above, a process of performing data communication between any two nodes.

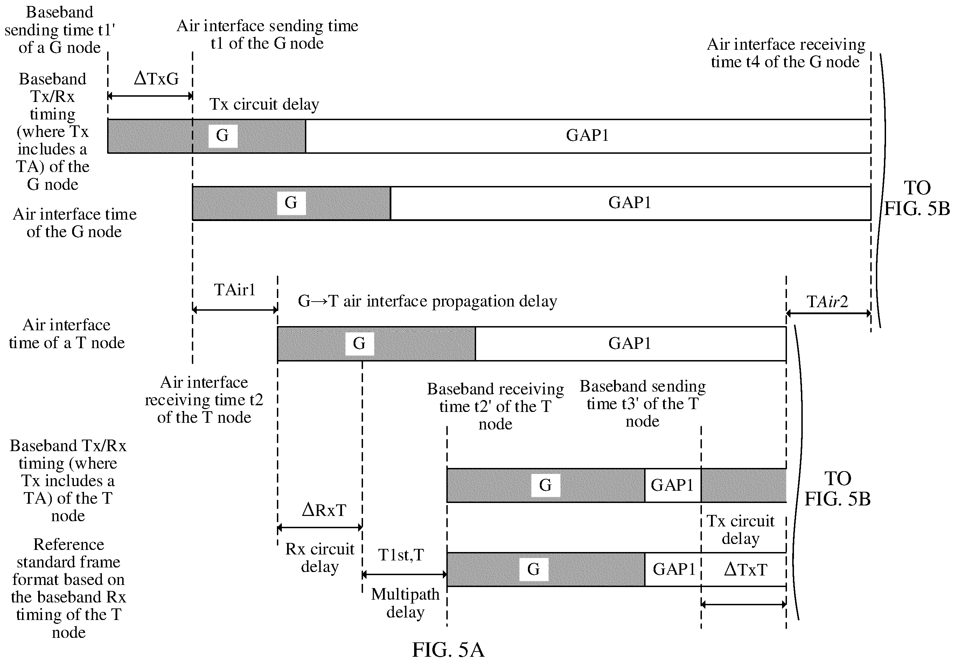

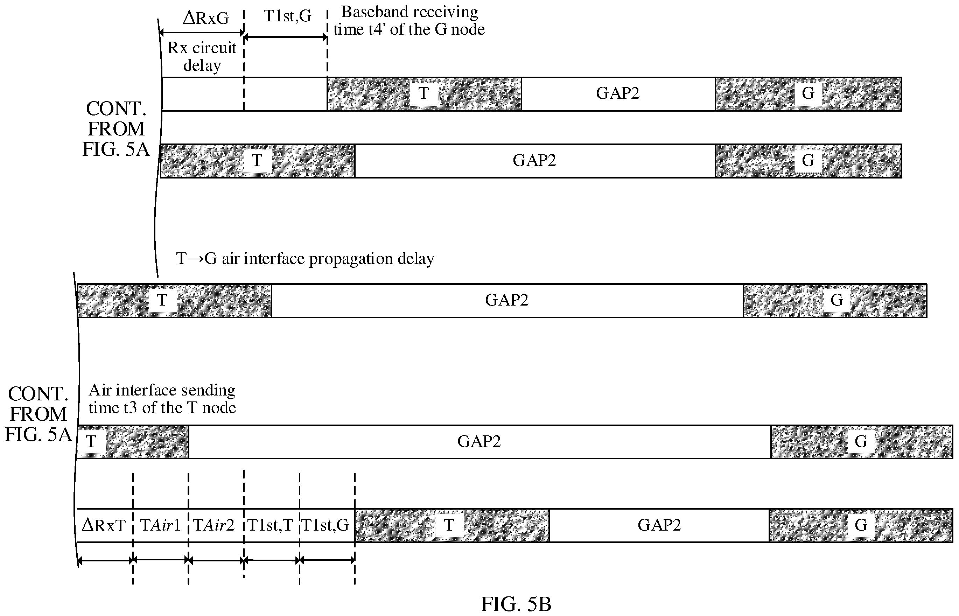

For example, FIG. 5A and FIG. 5B provide a schematic diagram of a process of performing data communication between two nodes (a G node and a T node). It can be learned with reference to FIG. 5A and FIG. 5B that a gray block G in FIG. 5A and FIG. 5B represents first data sent by the G node to the T node. A gray block T represents second data sent by the T node to the G node after the T node receives the first data. A white block GAP1 indicates a data transmission interval. One complete data transmission between the G node and the T node once includes: The G node sends data to the T node, and the T node sends data to the G node after the T node receives the data sent by the G node. A data transmission delay from time of sending the data by the G node to time of receiving the data by the T node includes: a transmit ($T_x$) circuit delay, an air interface propagation delay ($T_{Air}$), a receive ($R_x$) circuit delay, and a multipath delay. The transmit circuit delay is a delay generated when a signal is transmitted on an internal circuit of the G node before the G node sends the signal through a transmit port of the G node. The air interface propagation delay is a delay generated when a signal is transmitted from the transmit port of the G node and received by the T node through a receive port. The receive circuit delay is a delay generated when the signal is transmitted on an internal circuit of the T node after the T node receives the signal. The multipath delay is a delay generated by different time at which components of the signal arrive at a receiving end after the signal is propagated through different paths.

It can be learned with reference to FIG. 5A and FIG. 5B that the G node modulates the first data at a moment t1'. After the first data is subject to a circuit delay of $\Delta Tx_G$ on a baseband, the first data is sent to the T node at a moment t1 through a transmission interface of the G node.

After the first data is subject to an air interface propagation delay of $T_{Air1}$, the T node receives the first data at a moment t2 through a transmission interface. After the first data is subject to a circuit delay of $\Delta Rx_T$ and a multipath delay of $T_{1st,T}$ on the T node, the first data is received by a baseband of the T node at a moment t2'.

Further, after the T node receives the first data, the T node modulates the first data at a moment t3'. After the second data is subject to a circuit delay of $\Delta Tx_T$ on the baseband, the second data is sent to the G node at a moment t3 through the transmission interface of the T node.

After the second data is subject to an air interface propagation delay of $T_{Air2}$, the G node receives the second data at a moment t4 through the transmission interface. After the second data is subject to a circuit delay of $\Delta Rx_G$ and a multipath delay of $T_{1st,G}$ on the G node, the second data is received by the baseband of the G node at a moment t4'.

For the foregoing data transmission process between the G node and the T node, the G node may calibrate the transmit circuit delay $\Delta Tx_G$ and the receive circuit delay $\Delta Rx_G$ of the G node. Therefore, a total timing advance $TA_{T,total}$ by which time of sending data to the G node by the T node needs to be advanced may be obtained.

$$TA_{T,total} = \Delta Rx_T + T_{1st,T} + \Delta Tx_T + T_{Air1} + T_{Air2} + T_{1st,G}$$
$$= \Delta Rx_T + \Delta Tx_T + T_{1st,T} + 2T_{Air} + T_{1st,G}$$
$$= \Delta Rx_T + \Delta Tx_T + T_{1st,T} + RTT + T_{1st,G}.$$

When the T node sends the data to the G node, the T node may also calibrate the transmit circuit delay $\Delta Tx_T$ and the receive circuit delay $\Delta Rx_T$ of the T node. Therefore, when a sending timing advance $TA_{Air}$ of the T node is calculated, the transmit circuit delay $\Delta Tx_T$ and the receive circuit delay $\Delta Rx_T$ of the T node may not be considered. It may be learned that the sending timing advance $TA_{Air}$ of the T node is as follows:

$$TA_{Air} = RTT + T_{1st,T} + T_{1st,G}.$$

The RTT is an air interface propagation delay between the T node and the G node.

Therefore, when the G node performs data communication with the T node, if the sending timing advance $TA_{Air}$ of the T node, the multipath delay $T_{1st,T}$ of the T node, and the multipath delay $T_{1st,G}$ of the G node can be obtained, the air interface propagation delay RTT between the T node and the G node may be obtained as follows:

$$RTT = TA_{Air} - T_{1st,T} - T_{1st,G}.$$

Further, a distance d between the G node and the T node may be obtained by using the air interface propagation delay RTT between the T node and the G node.

$$d = c * \frac{RTT}{2}.$$

c is a speed of light.

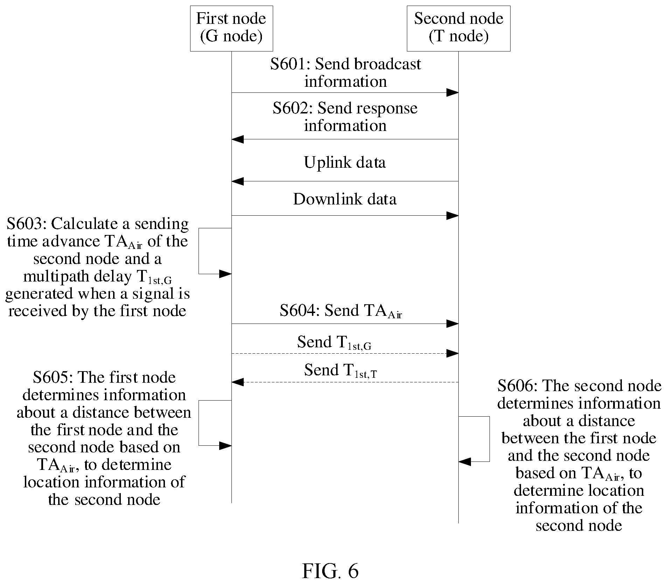

For example, based on the wireless communication system shown in FIG. 2 and the data communication process shown in FIG. 5A and FIG. 5B, FIG. 6 is a method flowchart of a positioning method according to an embodiment of this application. In this embodiment of this application, both a first node and a second node that participate in positioning support positioning without signaling. The first node may be the G node in FIG. 5A and FIG. 5B, and the second node may be the T node in FIG. 5A and FIG. 5B. Refer to FIG. 6. The method includes S601 to S606.

S601: The first node sends broadcast information to the second node.

In this embodiment, before ranging is performed between the first node and the second node, the first node and the second node need to determine whether each other supports the positioning without signaling. That is, the first node needs to send the broadcast information to the second node. The broadcast information carries a plurality of pieces of signaling, and the plurality of pieces of signaling indicate whether the first node supports ranging without signaling, a size of a time synchronization smooth window used when the first node and the second node perform data transmission, and a start superframe number of the time synchronization smooth window. In this way, the second node can perform data transmission with the first node based on information carried in the broadcast information.

In a possible example, the first node sends signaling G_NO_SIG_RANGING_EN to indicate whether the first node supports the ranging without signaling. The first node indicates, by sending signaling TIME_SYNC_WIN_SIZE, the size of the time synchronization smooth window used when the first node communicates with the second node. The first node sends signaling SFN%TIME_SYNC_WIN_SIZE=0 to indicate the start superframe number of the time synchronization smooth window used when the first node and the second node perform data transmission. The first node sends signaling REQ_T_TIME_1ST_OFFSET to indicate whether the second node is required to send a multipath delay of the second node.

In this embodiment of this application, the positioning without signaling refers to a positioning manner in which when performing positioning on the second node, the first node may perform positioning and measurement by using data transmitted between the first node and the second node, without using a dedicated positioning frame (a complete no-signaling mode), or by using only a small quantity of positioning frames (a limited signaling mode).

S602: The second node sends response information to the first node.

In this embodiment, after the first node sends the broadcast information to the second node, the first node further needs to receive the response information sent by the second node, to indicate that a connection is established between the first node and the second node.

After the second node receives the broadcast information sent by the first node, the second node determines, based on the broadcast information, whether the first node supports the positioning without signaling. After the second node determines that the first node supports the positioning without signaling, the second node further needs to send response information to the first node.

In a possible example, the response information carries a plurality of pieces of signaling. The second node sends signaling T_NO_SIG_RANGING_EN to indicate whether the second node supports the ranging without signaling. The second node sends signaling T_ACCURATE_TAME_ADJUST_EN to indicate whether the second node supports high-precision loop calibration. The second node sends signaling REQ_G_TIME_1ST_OFFSET to indicate whether the first node is required to send a multipath delay of the first node.

S603: The first node performs data communication with the second node, and the first node determines, based on uplink data information sent by the second node, a sending timing advance of the second node generated when the first node performs data transmission with the second node.

In this embodiment, after the first node determines, based on the response information sent by the second node, that the second node supports the positioning without signaling, the first node may synchronize time of the first node with that of the second node based on a plurality of data frames in the time synchronization smooth window used when the first node communicates with the second node, to determine the sending timing advance of the second node generated when the first node performs output transmission with the second node.

In a possible example, the first node and the second node may pre-agree on a size of the time synchronization smooth window in a protocol, for example, may set the size of the time synchronization smooth window to a fixed quantity of data frames, or to a fixed time period.

When the size of the time synchronization smooth window is set to the fixed quantity of data frames, the first node and the second node need to pre-agree on a quantity of data frames in the time synchronization smooth window. The first node may calculate a multipath gravity center (which is a time value) of each data frame in the time synchronization smooth window. The first node determines an average multipath gravity center of the plurality of data frames in the time synchronization smooth window based on the multipath gravity center location of each data frame. Then, a deviation between the average multipath gravity center and local time is used as the sending timing advance of the second node generated when the first node performs data communication with the second node.

When the size of the time synchronization smooth window is set to the fixed time period, the first node may first determine an average multipath gravity center of a plurality of data frames received within the fixed time period. Then, the first node may use a deviation between the average multipath gravity center and local time as the sending timing advance of the second node generated when the first node performs data communication with the second node.

In a possible example, when the first node determines the sending timing advance of the second node, the first node may use, as a synchronization reference time point, a multipath gravity center obtained by performing phase-shift (PS/maxid) estimation in frequency domain. The multipath gravity center PS obtained by performing phase-shift (PS/maxid) estimation in frequency domain is as follows:

$$PS = -\frac{1}{N_{Rx}} \sum_{m=0}^{N_{Rx}-1} \frac{angle\left(\sum_{k=0}^{N-D-1} h_{k+D,m}h_{k,m}^*\right)}{2\pi \cdot D \cdot \Delta f_{sc}}.$$

$N_{Rx}$ is a quantity of receive antennas, m is a receive antenna index, k is a subcarrier index, $\Delta f_{sc}$ is a subcarrier frequency spacing, h is channel estimation in frequency domain, and D is a quantity of subcarrier spacings.

It should be noted that the first node may determine the sending timing advance of the second node based on the multipath gravity center locations of the plurality of data frames received by the first node in the time synchronization smooth window. The first node may alternatively determine the sending timing advance of the second node based on another agreed location. In this embodiment of this application, a manner in which the first node determines the sending timing advance of the second node is not limited.

S604: The first node sends the calculated sending timing advance of the second node to the second node.

In this embodiment, after the first node calculates the sending timing advance of the second node generated when the first node performs data communication with the second node, the first node sends the calculated sending timing advance of the second node to the second node at a boundary of the time synchronization smooth window, so that the second node may adjust data sending time based on the sending timing advance.

In a possible example, if the broadcast information sent by the first node to the second node indicates that the second node needs to report a multipath delay generated when the second node receives a downlink signal sent by the first node, the response information sent by the second node to the first node indicates that the first node needs to deliver a multipath delay generated when the first node receives an uplink signal sent by the second node. When the first node sends the sending timing advance of the second node to the second node, the first node may further send, to the second node, a multipath delay $T_{1st}$ generated when the first node receives a signal. After the second node receives the timing advance sent by the first node, the second node may further send, to the first node, multipath delay information generated when the second node receives the signal sent by the first node.

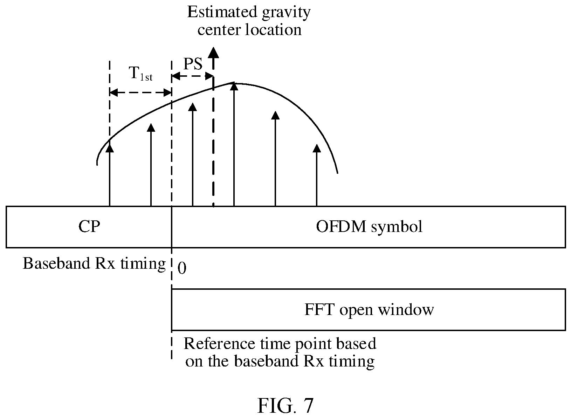

In a possible example, as shown in FIG. 7, when calculating the multipath delay, the first node and the second node may first calculate the multipath gravity center location of each of the plurality of data frames in the time synchronization smooth window. Then, an open window location of an OFDM symbol is smoothly aligned to the multipath gravity center location through receiving time tracking (smooth filtering), or baseband receiving time (RX Timing) of the first node is aligned to the multipath gravity center location. In this case, an average first path of the plurality of data frames received in the time synchronization smooth window is subtracted from the estimated multipath gravity center, to obtain the multipath delay $T_{1st}$ (which may also be referred to as a first path offset) generated when the first node receives the signal.

S605: The first node determines information about a distance between the first node and the second node based on the obtained sending timing advance of the second node, to determine location information of the second node.

In this embodiment, in a process in which the first node performs data communication with the second node, the first node calculates a sending timing advance of the second node in each time synchronization smooth window, and sends the sending timing advance to the second node. It may be learned from FIG. 5A and FIG. 5B that the sending timing advance $TA_{Air}$ of the second node is $TA_{Air} = RTT + T_{1st,T} + T_{1st,G}$. Therefore, the first node may calculate the distance between the first node and the second node based on the sending timing advance of the second node, to determine a location of the second node.

It should be noted that the location of the second node may be a relative location, that is, a location of the second node relative to the first node. The location of the second node may alternatively be an absolute location. When the location of the second node is the absolute location, location information of the first node further needs to be obtained, and the location of the second node is determined based on the location information of the first node and the information about the distance between the second node and the first node.

In a possible example, when sending the uplink data to the first node, the second node further sends the multipath delay of the second node. In this case, when the first node calculates the distance between the first node and the second node, the first node may perform ranging in the limited signaling mode. That is, an air interface propagation delay RTT between the second node and the first node is as follows:

$$RTT = TA_{Air} - T_{1st,T} - T_{1st,G}.$$

$$d = c * \frac{RTT}{2}.$$

The RTT is an air interface propagation delay of a signal between the first node and the second node, $TA_{Air}$ is the sending timing advance of the second node, $T_{1st,G}$ is the first path offset of the first node, $T_{1st,T}$ is a first path offset of the second node, d is the distance between the first node and the second node, and c is a speed of light.

In a possible example, the second node does not send the multipath delay of the second node to the first node. In this case, when the first node calculates the distance between the first node and the second node, the first node may perform ranging in the complete no-signaling mode. In this case, it may be considered that the multipath delay of the first node is equal to the multipath delay of the second node. An air interface propagation delay RTT between the second node and the first node is as follows:

$$RTT = TA_{Air} - T_{1st,T} - T_{1st,G} \cong TA_{Air} - 2T_{1st,G}.$$

$$d = c * \frac{RTT}{2}.$$

The RTT is an air interface propagation delay of a signal between the first node and the second node, $TA_{Air}$ is the sending timing advance of the second node, $T_{1st,G}$ is the first path offset of the first node, $T_{1st,T}$ is a first path offset of the second node, d is the distance between the first node and the second node, and c is a speed of light.

In a possible embodiment, when the information about the distance between the first node and the second node is calculated by using the sending timing advance of the first node, whether the first node and the second node perform loop delay calibration further needs to be determined. In this embodiment, the loop delay calibration is calibration of a calibration error generated when circuit calibration is performed on the first node and the second node.

Before whether the first node and the second node perform loop delay calibration is determined, a calibration mode used when the first node and the second node perform circuit calibration first needs to be determined. If the calibration mode used when the first node and the second node perform circuit calibration is a high-precision delay calibration mode (indicating that the error generated when the first node and the second node perform circuit calibration is very small and can be ignored), the calibration error generated when the first node and the second node perform circuit calibration does not need to be considered. Adjustment precision of advanced precision calibration and high-precision delay adjustment is less than 1/512Ts, where Ts=1/30.72e6s.

If the first node does not support a high-precision calibration mode, after calculating the sending timing advance $TA_{Air}$ of the second node, the first node further needs to subtract the calibration error ($Cali_{Err,G}$) of the first node from $TA_{Air}$. That is,

$$TA_{Air} = TA_{Air} + Cali_{Err,G}.$$

If the second node does not support the high-precision delay adjustment, in the limited signaling mode, when the second node sends the first path offset of the second node to the first node, the second node needs to send a calibrated first path offset. That is, the first path offset $T_{1st,T}$ is $T_{1st,T} = T_{1st,T} + \text{TIME\_ERR\_T}$. TIME_ERR_T is a sum of a loop calibration error and a receiving time adjustment error.

S606: The second node determines the information about the distance between the first node and the second node based on received first time, to determine the location information of the second node.

In this embodiment, after the second node receives the first time sent by the first node, the second node may calculate the information about the distance between the second node and the first node based on the received first time, to determine the location of the second node. When the location information of the first node is known, the second node may obtain the location of the second node based on the determined information about the distance between the second node and the first node and the location information of the first node.

In a possible example, when sending the first time to the second node, the first node further sends the multipath delay of the first node. In this case, when ranging is performed on the second node, ranging may be performed on the second node in the limited signaling mode. That is, an air interface propagation delay RTT between the second node and the first node is as follows:

$$RTT = TA_{Air} - T_{1st,T} - T_{1st,G}.$$

$$d = c * \frac{RTT}{2}.$$

The RTT is an air interface propagation delay of a signal between the first node and the second node, $TA_{Air}$ is the sending timing advance of the second node, $T_{1st,G}$ is the first path offset of the first node, $T_{1st,T}$ is a first path offset of the second node, d is the distance between the first node and the second node, and c is a speed of light.

In a possible example, when sending the first time to the second node, the first node does not send the multipath delay of the first node. Therefore, when ranging is performed on the second node, ranging may be performed on the second node in the complete no-signaling mode. In this case, it may be considered that the multipath delay of the first node is equal to the multipath delay of the second node. An air interface propagation delay RTT between the second node and the first node is as follows:

$$RTT = TA_{Air} - T_{1st,T} - T_{1st,G} \cong TA_{Air} - 2T_{1st,T}.$$

$$d = c * \frac{RTT}{2}.$$

The RTT is an air interface propagation delay of a signal between the first node and the second node, $TA_{Air}$ is the sending timing advance of the second node, $T_{1st,G}$ is the first path offset of the first node, $T_{1st,T}$ is a first path offset of the second node, d is the distance between the first node and the second node, and c is a speed of light.

In a possible embodiment, when the information about the distance between the first node and the second node is calculated by using the sending timing advance of the second node, whether the first node and the second node perform loop delay calibration further needs to be determined.

In this embodiment, the loop delay calibration is calibration of a calibration error generated when circuit calibration is performed on the first node and the second node.

Before whether the first node and the second node perform loop delay calibration is determined, a calibration mode used when the first node and the second node perform circuit calibration first needs to be determined. If the first node and the second node perform circuit calibration in a high-precision delay calibration mode (indicating that the error generated when the first node and the second node perform circuit calibration is very small and can be ignored), the calibration error generated when the first node and the second node perform circuit calibration does not need to be considered. Adjustment precision of advanced precision calibration and high-precision delay adjustment is less than 1/512Ts, where Ts=1/30.72e6s.

If the first node does not support a high-precision calibration mode, after calculating the sending timing advance $TA_{Air}$ of the second node, the first node further needs to subtract the calibration error ($Cali_{Err,G}$) of the first node from $TA_{Air}$. That is,

$$TA_{Air} = TA_{Air} + Cali_{Err,G}.$$

If the second node does not support the high-precision delay adjustment, in the limited signaling mode, when the second node sends the first path offset of the second node to the first node, the second node needs to send a calibrated first path offset. That is, the first path offset $T_{1st,T}$ is $T_{1st,T} = T_{1st,T} + $ TIME_ERR_T. TIME_ERR_T is a sum of a loop calibration error and a receiving time adjustment error.

Any two nodes need to perform time synchronization before performing information transmission. In this embodiment of this application, the location information of the second node is determined by using the sending timing advance of the second node generated when the first node and the second node perform time synchronization. In this way, when ranging/positioning is performed on the second node, dedicated ranging signaling does not need to be added (the complete no-signaling mode in the foregoing embodiment), or only a small amount of signaling needs to be added (the limited signaling mode in the foregoing embodiment), thereby reducing costs of performing ranging/positioning on the second node.

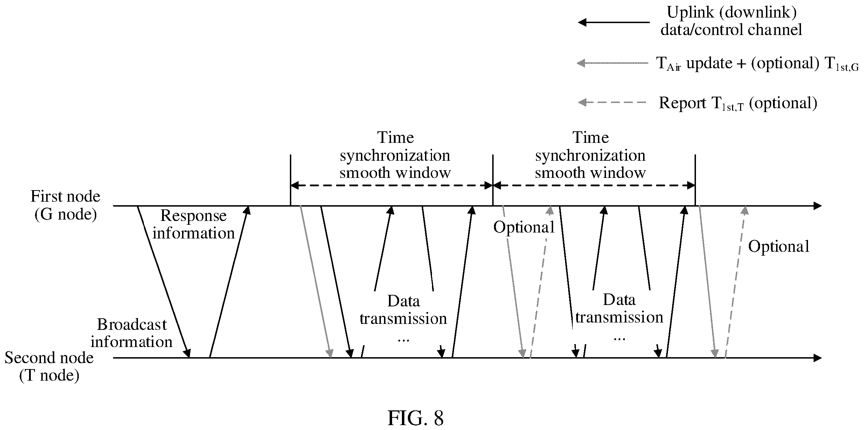

For example, based on the wireless communication system shown in FIG. 2, FIG. 8 is a schematic diagram of a data transmission process according to an embodiment of this application. It can be learned with reference to FIG. 8 that in a process of data transmission between a first node and a second node, the first node performs measurement smoothing on a sending timing advance of the second node in a plurality of time synchronization smooth windows. That is, in this embodiment, in a process in which the first node performs data communication with the second node, the first node needs to update, in each time synchronization smooth window, a sending timing advance of the second node generated when the first node performs data communication with the second node, and send the calculated sending timing advance of the second node to the second node at a boundary of each time synchronization smooth window. In this way, the second node may adjust, based on the received sending timing advance, sending time of uplink data of the second node. Then, the first node continues to receive, in a next time synchronization smooth window, uplink data sent by the second node, and updates, based on the uplink data, the sending timing advance of the second node generated when the first node performs data communication with the second node.

In a possible example, the first node determines, based on a data frame received from the second node in a first time synchronization smooth window, that the sending timing advance of the second node generated when the first node performs data communication with the second node is $2 \mu s$. The first node sends the sending timing advance to the second node, so that the second node adjusts data sending time based on the sending timing advance value. Then, the first node continues to receive, in a second time synchronization smooth window, a data frame sent by the second node, and calculates that an average multipath gravity center of the data frame in the second time synchronization smooth window is $1 \mu s$. In this case, the sending timing advance of the second node generated when the first node performs data communication with the second node is $3 \mu s$ ($2 \mu s + 1 \mu s$).

In this embodiment of this application, the first node continuously updates a sending timing advance $TA_{Air}$ of the second node. The second node receives, for a plurality of times, the timing advance $TA_{Air}$ sent by the first node. When the first node and the second node perform positioning and ranging based on $TA_{Air}$, positioning and ranging may be performed based on any $TA_{Air}$, in a data transmission process between the first node and the second node, or positioning and ranging may be performed by obtaining an average value of a plurality of sending timing advances $TA_{Air}$. Further, when a distance between the first node and the second node dynamically changes, the first node and the second node may perform positioning and ranging based on finally obtained $TA_{Air}$.

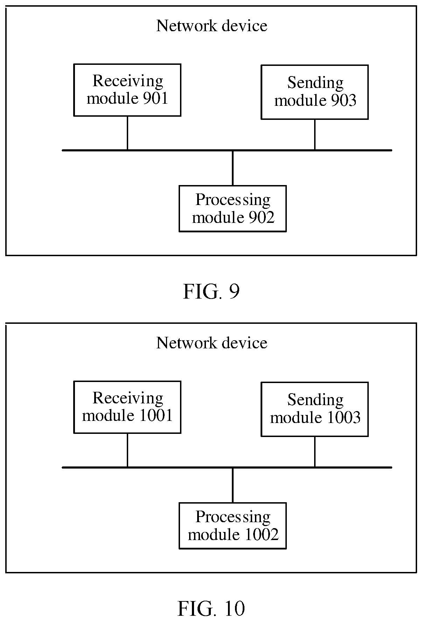

For example, FIG. 9 is a schematic diagram of a structure of a network device according to the present invention. Refer FIG. 9. The device includes a receiving module 901, a processing module 902, and a sending module 903.

The receiving module 901 is configured to receive data information sent by a terminal device.

The processing module 902 is configured to: determine, based on the received data information, delay information in data transmission between the network device and the terminal device, and determine a sending timing advance of the terminal device based on the delay information.

The sending module 903 is configured to send the determined sending timing advance of the terminal device to the terminal device.

The processing module 902 is further configured to determine a distance between the network device and the terminal device based on the determined sending timing advance of the terminal device.

In a possible example, when a location of the network device is known, the network device may further determine a location of the terminal device based on the determined distance between the terminal device and the network device and the location of the network device.

The embodiment of the network device described in FIG. 9 is merely an example. For example, the module division is merely logical function division and may be other division during actual implementation. For example, a plurality of modules or components may be combined or integrated into another system, or some features may be ignored or not performed. Functional modules in embodiments of this application may be integrated into one processing module, or each module may exist alone physically, or two or more modules may be integrated into one module.

For example, the modules in FIG. 9 may be implemented in a form of hardware, or may be implemented in a form of a software functional module. For example, when the processing module 902 is implemented by software, the processing module 902 may be implemented by a software functional module generated after the system-on-chip 211 in FIG. 3 reads the program code stored in the memory 213. Alternatively, the foregoing modules in FIG. 9 may be separately implemented by different hardware in the network device. For example, the processing module 902 is implemented by a part of processing resources (for example, a core in a multi-core processor) in the system-on-chip 211 in FIG. 3. The sending module 903 and the receiving module 901 are completed by using the IoT PHY chip 212 and another processing resource (for example, another core in the multi-core processor) in the system-on-chip 21 in FIG. 3, or by a programmable device such as an FPGA or a coprocessor. Clearly, the foregoing functional modules may alternatively be implemented by a combination of software and hardware. For example, the sending module 903 and the receiving module 901 are implemented by a hardware programmable device, and the processing module 902 is a software functional module generated after a CPU reads the program code stored in the memory.

For example, FIG. 10 is a schematic diagram of a structure of a terminal device according to the present invention. Refer FIG. 10. The device includes a receiving module 1001, a processing module 1002, and a sending module 1003.

The receiving module 1001 is configured to receive first time sent by a network device. The first time is a sending timing advance of the terminal device.

The processing module 1002 is configured to determine a distance between the terminal device and the network device based on the received first time.

In a possible example, when a location of the network device is known, the terminal device may further determine a location of the terminal device based on the determined distance between the terminal device and the network device and the location of the network device.

The sending module 1003 is configured to determine, based on the received first time, time at which the terminal device sends uplink data to the network device.

The embodiment of the network device described in FIG. 10 is merely an example. For example, the module division is merely logical function division and may be other division during actual implementation. For example, a plurality of modules or components may be combined or integrated into another system, or some features may be ignored or not performed. Functional modules in embodiments of this application may be integrated into one processing module, or each module may exist alone physically, or two or more modules may be integrated into one module.

For example, the modules in FIG. 10 may be implemented in a form of hardware, or may be implemented in a form of a software functional module. For example, when the processing module 1002 is implemented by software, the processing module 1002 may be implemented by a software functional module generated after the at least one processor 221 in FIG. 4 reads the program code stored in the memory 223. Alternatively, the foregoing modules in FIG. 10 may be separately implemented by different hardware in the terminal device. For example, the processing module 1002 is implemented by a part of processing resources (for example, a core in a multi-core processor) in the at least one processor 221 in FIG. 4. The sending module 1003 and the receiving module 1001 are completed by the network interface 222 and another processing resource (for example, another core in the multi-core processor) in the accompanying drawings in the at least one processor 221, or by a programmable device such as an FPGA or a coprocessor. Clearly, the foregoing functional modules may alternatively be implemented by a combination of software and hardware. For example, the sending module 1003 and the receiving module 1001 are implemented by a hardware programmable device, and the processing module 1002 is a software functional module generated after a CPU reads the program code stored in the memory.

The method steps in embodiments of this application may be implemented by hardware, or may be implemented by executing software instructions by a processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, to enable the processor to read information from the storage medium and write information into the storage medium. Certainly, the storage medium may be a component of the processor. The processor and the storage medium may be disposed in an ASIC.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted by using the computer-readable storage medium. The computer instructions may be transmitted from a website, a computer, a server, or a data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

It may be understood that various numbers in embodiments of this application are merely used for differentiation for ease of description, and are not intended to limit the scope of embodiments of this application.

**Claims**

1. A positioning method, wherein the method comprises:

   sending, by a first device, first information to a second device, wherein the first information comprises a size of a time synchronization smooth window used when the first device performs data communication with the second device;
   receiving, by the first device in the time synchronization smooth window, a plurality of data frames sent by the second device;
   determining, by the first device, first time and a first multipath delay based on the plurality of data frames, wherein the first time is a sending timing advance of the second device generated when the first device communicates with the second device; and
   determining, by the first device, location information of the second device based on the first time and the first multipath delay.

2. The method according to claim 1, wherein the determining, by the first device, first time based on the plurality of data frames comprises:

   determining a multipath gravity center of each of the plurality of data frames received in the time synchronization smooth window; and
   determining the first time based on the plurality of multipath gravity centers.

3. The method according to claim 1 or 2, wherein the determining, by the first device, location information of the second device based on the first time and the first multipath delay comprises:

   determining, based on the first time and the first multipath delay, an air interface propagation delay in communication between the first device and the second device; and
   determining the location information of the second device based on the air interface propagation delay.

4. The method according to claim 1 or 2, wherein the method further comprises:
   receiving, by the first device, third information sent by the second device, wherein the third information carries a second multipath delay, and the second multipath delay is a delay generated when the second device receives information sent by the first device.

5. The method according to claim 4, wherein the determining, by the first device, location information of the second device based on the first time and the first multipath delay comprises:

   determining, based on the first time, the first multipath delay, and the second multipath delay, an air interface propagation delay in communication between the first device and the second device; and
   determining the location information of the second device based on the air interface propagation delay.

6. A positioning method, wherein the method comprises:

   receiving, by a second device, first information sent by a first device, wherein the first information comprises first time, and the first time is a sending timing advance of the second device generated when the first device communicates with the second device;
   receiving, by the second device, a plurality of data frames sent by the first device, and determining a second multipath delay of the second device based on the plurality of data frames; and
   determining, by the second device, location information of the second device based on the first time and the second multipath delay.

7. The method according to claim 6, wherein the determining, by the second device, location information of the second device based on the first time and the second multipath delay comprises:

   determining, based on the first time and the second multipath delay, an air interface propagation delay in communication between the first device and the second device; and
   determining the location information of the second device based on the air interface propagation delay.

8. The method according to claim 6, wherein the method further comprises:
receiving, by the second device, second information sent by the first device, wherein the second information carries a first multipath delay, and the first multipath delay is a delay generated when the first device receives information sent by the second device.

9. The method according to claim 8, wherein the determining, by the second device, location information of the second device based on the first time and the second multipath delay comprises:

   determining, based on the first time, the first multipath delay, and the second multipath delay, an air interface propagation delay in communication between the first device and the second device; and
   determining the location information of the second device based on the air interface propagation delay.

10. A network device, comprising:

    a sending module, configured to send first information to a terminal device, wherein the first information comprises a size of a time synchronization smooth window used when a first device performs data communication with the second device;
    a receiving module, configured to receive, in the time synchronization smooth window, a plurality of data frames sent by the terminal device; and
    a processing module, configured to determine first time and a first multipath delay based on the plurality of data frames, wherein the first time is a sending timing advance of the second device generated when the first device communicates with the second device, wherein
    the processing module is further configured to determine a distance between the network device and the terminal device based on the first time and the first multipath delay.

11. The device according to claim 10, wherein the processing module is configured to:

    determine a multipath gravity center of each of the plurality of data frames received in the time synchronization smooth window; and
    determine the first time based on the plurality of multipath gravity centers.

12. The device according to claim 10 or 11, wherein the processing module is configured to:

    determine, based on the first time and the first multipath delay, an air interface propagation delay in communication between the first device and the second device; and
    determine the location information of the second device based on the air interface propagation delay.

13. The device according to claim 10 or 11, wherein the receiving module is further configured to:
    receive third information sent by the second device, wherein the third information carries a second multipath delay, and the second multipath delay is a delay generated when the second device receives information sent by the first device.

14. The device according to claim 13, wherein the processing module is configured to:

    determine, based on the first time, the first multipath delay, and the second multipath delay, an air interface propagation delay in communication between the first device and the second device; and
    determine the location information of the second device based on the air interface propagation delay.

15. A terminal device, comprising:

    a receiving module, configured to receive first information sent by a network device, wherein the first information comprises first time, and the first time is a sending timing advance of a second device generated when a first device communicates with the second device, wherein
    the receiving module is further configured to receive a plurality of data frames sent by the first device, and determine a second multipath delay of the second device based on the plurality of data frames; and
    a processing module, configured to determine location information of the second device based on the first time and the second multipath delay.

**16.** The device according to claim 15, wherein the processing module is configured to:

determine, based on the first time and the second multipath delay, an air interface propagation delay in communication between the first device and the second device; and
determine the location information of the second device based on the air interface propagation delay.

**17.** The device according to claim 15, wherein the receiving module is further configured to:
receive second information sent by the first device, wherein the second information carries a first multipath delay, and the first multipath delay is a delay generated when the first device receives information sent by the second device.

**18.** The device according to claim 17, wherein the processing module is configured to:

determine, based on the first time, the first multipath delay, and the second multipath delay, an air interface propagation delay in communication between the first device and the second device; and
determine the location information of the second device based on the air interface propagation delay.

**19.** A computer-readable medium, wherein the computer storage medium stores instructions, and when the instructions are run on a computer, the computer is enabled to perform the method according to any one of claims 1 to 5 or claims 6 to 9.

**20.** A computer program product comprising instructions, wherein when the instructions are run on a computer, the computer is enabled to perform the method according to any one of claims 1 to 5 or claims 6 to 9.

First terminal device

Second terminal device

Request

Ack

S101

S102: Send a first measurement frame (M-Rang), and record air interface sending time t1 of the measurement frame

t1=ToD (M)

t2=ToA (M)

S104: Send a second measurement frame (ACK-Rang), and record air interface sending time t3 of the measurement frame

S103: Measure receiving time t2 of the first measurement frame

t3=ToD (Ack)

t4=ToA (Ack)

S105: Measure receiving time t4 of the second measurement frame

S106

M-Report

t1 and t4

Ack-Report

t2 and t3

M-Rang

S107

Ack-Rang

FIG. 1

FIG. 2

FIG. 3

FIG. 4

Baseband sending time t1' of a G node

Air interface sending time t1 of the G node

Baseband Tx/Rx timing (where Tx includes a TA) of the G node

$\Delta$TxG

Tx circuit delay

G

GAP1

Air interface time of the G node

G

GAP1

Air interface receiving time t4 of the G node

TAir2

TO FIG. 5B

TAir1

Air interface time of a T node

Air interface receiving time t2 of the T node

G$\rightarrow$T air interface propagation delay

$\Delta$RxT

Rx circuit delay

T1st,T

Multipath delay

G

GAP1

Baseband receiving time t2' of the T node

Baseband Tx/Rx timing (where Tx includes a TA) of the T node

Baseband sending time t3' of the T node

G

GAP1

Reference standard frame format based on the baseband Rx timing of the T node

G

GAP1

$\Delta$TxT

Tx circuit delay

TO FIG. 5B

FIG. 5A

EP 4 507 410 A1

ΔRxG | T1st,G | Baseband receiving
time t4' of the G node

Rx circuit
delay

| | T | GAP2 | G |

CONT.
FROM
FIG. 5A

| T | GAP2 | G |

T→G air interface propagation delay

| T | GAP2 | G |

CONT.
FROM
FIG. 5A

Air interface sending
time t3 of the T node

| T | GAP2 | G |

| ΔRxT | TAir1 | TAir2 | T1st,T | T1st,G | T | GAP2 | G |

FIG. 5B

First node
(G node)

Second node
(T node)

S601: Send broadcast
information

S602: Send response
information

Uplink data

Downlink data

S603: Calculate a sending
time advance $TA_{Air}$ of the
second node and a
multipath delay $T_{1st,G}$
generated when a signal is
received by the first node

S604: Send $TA_{Air}$

Send $T_{1st,G}$

Send $T_{1st,T}$

S605: The first node
determines information
about a distance between
the first node and the
second node based on
$TA_{Air}$, to determine
location information of
the second node

S606: The second node
determines information
about a distance
between the first node
and the second node
based on $TA_{Air}$, to
determine location
information of the
second node

FIG. 6

Estimated gravity
center location

$T_{1st}$   PS

CP   OFDM symbol

Baseband Rx timing  0

FFT open window

Reference time point based
on the baseband Rx timing

FIG. 7

FIG. 8

Network device

Receiving
module 901

Sending
module 903

Processing
module 902

FIG. 9

Network device

Receiving
module 1001

Sending
module 1003

Processing
module 1002

FIG. 10

## INTERNATIONAL SEARCH REPORT

| International application No. |
| --- |
| **PCT/CN2022/102454** |

### A. CLASSIFICATION OF SUBJECT MATTER

H04W64/00(2009.01)i

According to International Patent Classification (IPC) or to both national classification and IPC

### B. FIELDS SEARCHED

Minimum documentation searched (classification system followed by classification symbols)

IPC：H04W

Documentation searched other than minimum documentation to the extent that such documents are included in the fields searched

Electronic data base consulted during the international search (name of data base and, where practicable, search terms used)

CNABS; CNTXT; CNKI; VEN; ENTXTC; 3GPP: 同步, 窗, 多径, 时延, 延时, 延迟, 定时提前, 时间提前, 位置, 定位, 空口, synchroniz+, window, multipath, multi+ 1w path, delay, timing advance, TA, position+, location

### C. DOCUMENTS CONSIDERED TO BE RELEVANT

| Category* | Citation of document, with indication, where appropriate, of the relevant passages | Relevant to claim No. |
| --- | --- | --- |
| A | CN 101808359 A (DATANG MOBILE COMMUNICATIONS EQUIPMENT CO., LTD.) 18 August 2010 (2010-08-18) <br> description, paragraphs [0025]-[0064] | 1-20 |
| A | CN 1238896 A (NOKIA TELECOMMUNICATIONS OY) 15 December 1999 (1999-12-15) <br> entire document | 1-20 |
| A | CN 110663276 A (NOKIA SOLUTIONS AND NETWORKS OY) 07 January 2020 (2020-01-07) <br> entire document | 1-20 |
| A | WO 2022081893 A1 (IDAC HOLDINGS, INC.) 21 April 2022 (2022-04-21) <br> entire document | 1-20 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **21 February 2023** | **17 March 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

# EP 4 507 410 A1

| INTERNATIONAL SEARCH REPORT | International application No. |
| Information on patent family members | PCT/CN2022/102454 |

| Patent document cited in search report | | | Publication date (day/month/year) | Patent family member(s) | | | Publication date (day/month/year) |
|---|---|---|---|---|---|---|---|
| CN | 101808359 | A | 18 August 2010 | EP | 2398290 | A1 | 21 December 2011 |
| | | | | EP | 2398290 | A4 | 27 February 2013 |
| | | | | US | 2012015669 | A1 | 19 January 2012 |
| | | | | US | 8825076 | B2 | 02 September 2014 |
| | | | | WO | 2010091625 | A1 | 19 August 2010 |
| CN | 1238896 | A | 15 December 1999 | EP | 0937368 | A1 | 25 August 1999 |
| | | | | EP | 0937368 | B1 | 07 April 2004 |
| | | | | DE | 69728553 | D1 | 13 May 2004 |
| | | | | NO | 992047 | A | 28 June 1999 |
| | | | | JP | 2001503576 | A | 13 March 2001 |
| | | | | WO | 9819488 | A1 | 07 May 1998 |
| | | | | AU | 4784397 | A | 22 May 1998 |
| | | | | AU | 724594 | B2 | 28 September 2000 |
| CN | 110663276 | A | 07 January 2020 | WO | 2018189132 | A1 | 18 October 2018 |
| | | | | EP | 3610683 | A1 | 19 February 2020 |
| | | | | EP | 3610683 | B1 | 29 September 2021 |
| WO | 2022081893 | A1 | 21 April 2022 | None | | | |

Form PCT/ISA/210 (patent family annex) (July 2022)